# EUROPÄISCHE PATENTSCHRIFT

(11) **EP 2 671 849 B1**
(45) Veröffentlichungstag und Bekanntmachung des Hinweises auf die Patenterteilung: **25.04.2018**
(21) Anmeldenummer: 13168936.6
(22) Anmeldetag: 23.05.2013
(51) Int. Cl.: C03C 17/09, C03C 17/36, F24C 15/10, H05B 6/12

(54) **Herstellverfahren einer Hausgerätevorrichtung und Hausgerätevorrichtung**
Method for manufacturing a domestic appliance and domestic appliance
Procédé de fabrication d'un dispositif d'appareil ménager et dispositif d'appareil ménager

(30) Priorität: 04.06.2012 ES 201230853
(43) Veröffentlichungstag der Anmeldung: 11.12.2013
(73) Patentinhaber: BSH Hausgeräte GmbH, 81739 München (DE)
(72) Erfinder: Alaman Aguilar, Jorge, 50008 Zaragoza (ES); Alcala Borao, Raquel, 50013 Zaragoza (ES); Ester Sola, Francisco Javier, 50001 Zaragoza (ES); Perez Cabeza, Pilar, 50008 Zaragoza (ES); Planas Layunta, Fernando, 50009 Zaragoza (ES); Romeo Velilla, Rosario, 50008 Zaragoza (ES)

(56) Entgegenhaltungen:
- EP-A1- 2 157 208
- WO-A1-93/18891
- WO-A1-2011/085995
- WO-A1-2012/028986
- WO-A2-2004/067804
- DE-A1- 10 303 648
- DE-A1-102007 033 338
- US-A- 2 309 108
- US-A- 3 265 520
- US-A- 4 194 042
- US-A1- 2002 150 797
- US-A1- 2006 198 988
- US-B1- 6 542 320

## Beschreibung

Die Erfindung geht aus von einem Herstellverfahren nach dem Oberbegriff des Anspruchs 1.
Aus der WO 2011/020720 A1 ist ein Herstellverfahren für eine als Kochfeldplatte ausgebildete Hausgerätevorrichtung bekannt. Die Kochfeldplatte umfasst einen als Grundplatte ausgebildeten Grundkörper, an dessen Unterseite eine zwei Schichten umfassende Schichteinheit angeordnet ist.
Die Aufgabe der Erfindung besteht insbesondere darin, ein gattungsgemäßes Herstellverfahren vorteilhaft weiterzuentwickeln. Die Aufgabe wird erfindungsgemäß durch die kennzeichnenden Merkmale des Patentanspruchs 1 gelöst, während vorteilhafte Ausgestaltungen und Weiterbildungen der Erfindung den Unteransprüchen entnommen werden können.
Die Erfindung geht aus von einem Herstellverfahren einer Hausgerätevorrichtung, welche einen Grundkörper und zumindest eine an wenigstens einem Oberflächenteilbereich des Grundkörpers angeordnete Schichteinheit umfasst.
Es wird vorgeschlagen, dass die Schichteinheit wenigstens teilweise einer abrasiven Abtragung durch einen Abrasivstoff unterzogen wird. Unter einem "Grundkörper" soll insbesondere ein Bauelement verstanden werden, welches wenigstens 60 %, insbesondere zumindest 70 %, vorzugsweise mindestens 80 % und besonders vorteilhaft wenigstens 90 % einer Gesamtmasse der Hausgerätevorrichtung ausmacht. Der Grundkörper ist als eine Grundplatte ausgebildet. Unter einer "Grundplatte" soll in diesem Zusammenhang insbesondere eine Platteneinheit verstanden werden, welche wenigstens 60 %, insbesondere zumindest 70 %, vorzugsweise mindestens 80 % und besonders vorteilhaft wenigstens 90 % einer Gesamtmasse der Hausgerätevorrichtung ausmacht. Unter einer "Platteneinheit" soll hierbei insbesondere eine räumliche Einheit verstanden werden, welche, in einer Abwicklung in einer Ebene betrachtet, in einem Querschnitt senkrecht zur Ebene eine unrunde Querschnittsfläche aufweist und senkrecht zur Ebene eine insbesondere zumindest im Wesentlichen gleichbleibende Materialstärke aufweist, die weniger als 50 %, vorzugsweise weniger als 25 % und besonders bevorzugt weniger als 10 % einer Erstreckung der räumlichen Einheit parallel zur Ebene, insbesondere einer kleinsten Erstreckung der Einheit parallel zur Ebene, beträgt. Vorzugsweise besteht der Grundkörper zumindest teilweise aus einer Glaskeramik. Der Grundkörper besteht zumindest teilweise optisch transparent. Unter einem "Oberflächenteilbereich" soll insbesondere ein Bereich einer Seitenfläche des Grundkörpers verstanden werden. Vorzugsweise erstreckt sich der Oberflächenteilbereich über eine gesamte, in einem montierten Zustand einem Innenraum eines Hausgeräts zugewandte Unterseite des Grundkörpers, insbesondere der Grundplatte. Unter einer "Seitenfläche" des Grundkörpers soll in diesem Zusammenhang insbesondere eine vorzugsweise makroskopisch glatte und besonders vorteilhaft ebene Oberfläche des Grundkörpers verstanden werden, welche insbesondere von Kanten, insbesondere auch von leicht abgerundeten Kanten, begrenzt ist. Hierbei soll unter einer "Kante" insbesondere ein Oberflächenbereich verstanden werden, welcher einen Krümmungsradius von höchstens 3 mm, insbesondere von maximal 2 mm, vorzugsweise von höchstens 1 mm und besonders vorteilhaft von maximal 0,5 mm aufweist.
Unter einer "Schichteinheit" soll in diesem Zusammenhang insbesondere eine Einheit verstanden werden, welche wenigstens eine Schicht umfasst. Unter einer "Schicht" soll insbesondere ein räumliches Element verstanden werden, das an eine Form einer Oberfläche des Grundkörpers, insbesondere der Grundplatte, angepasst ist und insbesondere eine maximale Dicke aufweist, welche kleiner ist als eine minimale Erstreckung des Grundkörpers, insbesondere eine minimale Dicke der Grundplatte. Die maximale Dicke der Schicht liegt vorteilhaft zwischen 20 nm und 200 nm und besonders vorteilhaft zwischen 30 nm und 150 nm. Vorzugsweise ist die Schicht eine metallische Schicht, insbesondere eine metallisehe Beschichtung, die besonders vorteilhaft Edelstahl aufweist. Unter einem "metallischen" Bauelement soll insbesondere ein Bauelement verstanden werden, welches zumindest eine metallische Eigenschaft aufweist. Die Menge der "metallischen Eigenschaften" umfasst hierbei insbesondere eine elektrische Leitfähigkeit von zumindest 10⁵ S/m bei 27°C, eine Wärmeleitfähigkeit von wenigstens 10 W/m/K bei 27°C und Spiegelglanz. Darunter, dass die Schichteinheit an dem Oberflächenteilbereich des Grundkörpers "angeordnet ist", soll insbesondere verstanden werden, dass wenigstens eine Schicht der Schichteinheit an dem Oberflächenteilbereich anliegt, vorzugsweise unmittelbar. Besonders vorteilhaft ist die Schicht an dem Oberflächenteilbereich des Grundkörpers befestigt. Vorzugsweise ist die Schicht durch ein Beschichtungsverfahren, insbesondere durch ein Siebdruckverfahren oder vorzugsweise durch eine chemische oder physikalische Gasphasenabscheidung auf den Oberflächenteilbereich aufgebracht. Unter einer "abrasiven Abtragung" soll insbesondere eine mechanische Materialabtragung insbesondere unter Verwendung zumindest eines Schleifmittels verstanden werden. Unter einem "Abrasivstoff" soll in diesem Zusammenhang insbesondere ein Stoff verstanden werden, welcher zu einer Erzielung der Materialabtragung bei der abrasiven Abtragung verwendet wird. Insbesondere wird der Abrasivstoff bei der abrasiven Abtragung relativ zur Schichteinheit bewegt.

Durch eine solche Ausgestaltung kann ein gattungsgemäßes Herstellverfahren vorteilhaft weiterentwickelt werden. Insbesondere können bei einer Herstellung von Hausgerätevorrichtungen weitere Gestaltungsmöglichkeiten eröffnet werden. So kann insbesondere ein Spiegelreflex der Schichteinheit reduziert werden, insbesondere unter zumindest weitgehend vernachlässigbarer Beeinflussung eines Transmissionsgrads der Schichteinheit. Ferner kann eine Edelstahlanmutung und/oder eine Anmutung von gebürstetem Stahl geschaffen werden. Ferner kann eine Beschädigung des Grundkörpers vermieden werden. Des Weiteren kann vorteilhaft einfach eine Automatisierung des Herstellverfahrens erreicht werden.

In einer bevorzugten Ausgestaltung der Erfindung wird vorgeschlagen, dass wenigstens eine Schicht der Schichteinheit durch eine Kathodenzerstäubung aufgebracht wird. Unter einer "Kathodenzerstäubung" soll insbesondere ein Beschichtungsverfahren verstanden werden, bei dem Atome und/oder Moleküle aus einem Festkörpertarget durch Beschuss mit energiereichen Ionen, vorzugsweise Edelgasionen, herausgelöst werden, in die Gasphase übergehen und auf dem zu beschichtenden Werkstück angelagert werden. Hierdurch können vorteilhaft große Oberflächen mit einer insbesondere relativ dünnen Schicht versehen werden. Ferner kann eine hohe Flexibilität erreicht werden, da insbesondere viele verschiedene Materialien und Kombinationen von Materialien verwendet werden können. Des Weiteren können optische Eigenschaften der Schicht vorteilhaft durch eine Anpassung einer Kristallstruktur der Schicht verändert werden.
In einer besonders bevorzugten Ausgestaltung der Erfindung wird vorgeschlagen, dass als Abrasivstoff zumindest im Wesentlichen Aluminiumoxid verwendet wird. Darunter, dass als Abrasivstoff "zumindest im Wesentlichen Aluminiumoxid verwendet wird" soll insbesondere verstanden werden, dass ein Abrasivstoff verwendet wird, welcher mit einem Massenanteil von wenigstens 60 %, insbesondere von mindestens 70 %, vorzugsweise von zumindest 80 % und besonders vorteilhaft von wenigstens 90 % aus Aluminiumoxid besteht. Hierdurch kann ein vorteilhaft harter und zäher Abrasivstoff verwendet werden. Ferner können Kosten gesenkt werden. Ein Abrasivstoff wird mit einer mittleren Korngröße zwischen 75 µm und 350 µm verwendet. Insbesondere wird ein Abrasivstoff mit einer mittleren Korngröße zwischen 100 µm und 300 µm, vorzugsweise zwischen 100 µm und 275 µm und besonders vorteilhaft von 101 µm und/oder 254 µm verwendet. Hierdurch kann eine vorteilhafte abrasive Abtragung der Schichteinheit erreicht werden. Insbesondere kann eine mit bloßem Auge sichtbare Abtragung erreicht werden. Ferner kann eine Beschädigung des Grundkörpers vermieden werden.
Ferner wird vorgeschlagen, dass die abrasive Abtragung mit einem in einem Trägerkörper eingebetteten Abrasivstoff durchgeführt wird. Unter einem "Trägerkörper" soll insbesondere ein geometrischer Körper verstanden werden, in welchem der Abrasivstoff gebunden ist, vorzugsweise in homogen verteilter Form. Hierdurch kann eine präzise und vorteilhaft kontrollierbare abrasive Abtragung erreicht werden.

Wenn als Trägerkörper ein zumindest wesentlich elastischer Körper verwendet wird, kann eine Materialabtragung am Grundkörper bei der abrasiven Abtragung zumindest weitgehend vermieden werden. Unter einem "zumindest wesentlich elastischen Körper" soll insbesondere ein Körper verstanden werden, welcher ein Elastizitätsmodul von höchstens 10 kN/mm², insbesondere maximal 5 kN/mm², vorzugsweise höchstens 1 kN/mm² und besonders vorteilhaft von maximal 0,1 kN/mm² bei 20°C aufweist.

In einer weiteren Ausgestaltung der Erfindung wird vorgeschlagen, dass als Trägerkörper ein zumindest im Wesentlichen aus Gummi bestehender Körper verwendet wird. Unter einem "zumindest im Wesentlichen aus Gummi bestehenden Körper" soll in diesem Zusammenhang ein Körper verstanden werden, welcher mit einem Massenanteil von zumindest 60 %, insbesondere von wenigstens 70 %, vorzugsweise von mindestens 80 % und besonders vorteilhaft von zumindest 90 % aus Gummi besteht. Hierdurch können Kosten gesenkt werden. Ferner kann eine vorteilhafte Halterung des Abrasivstoffs im Trägerkörper erreicht werden.

Vorteilhaft wird der Trägerkörper bei der abrasiven Abtragung relativ zur Schichteinheit bewegt. Darunter, dass der Tragekörper bei der abrasiven Abtragung "relativ zur Schichteinheit bewegt wird", soll insbesondere verstanden werden, dass die Schichteinheit und/oder der Trägerkörper bezogen auf den Erdboden bewegt werden, so dass eine Relativbewegung zwischen der Schichteinheit und dem Trägerkörper entsteht. Hierbei sind beliebige, dem Fachmann als sinnvoll erscheinende Relativbewegungen und Kombinationen mehrerer Relativbewegungen zwischen der Schichteinheit und dem Trägerkörper denkbar, insbesondere geradlinige, translatorische Bewegungen aber auch krummlinige, insbesondere kreisförmige, Bewegungen. Ferner ist eine Relativbewegung mit einer von Null verschiedenen Beschleunigung denkbar. Hierdurch kann eine besonders vorteilhaft kontrollierbare abrasive Abtragung ermöglicht werden. Ferner kann eine Vielzahl unterschiedlicher Gestaltungsmöglichkeiten erschlossen werden.

Ferner wird eine Hausgerätevorrichtung, insbesondere eine Hausgeräteplatte, vorgeschlagen, welche durch ein erfindungsgemäßes Herstellverfahren hergestellt ist. Unter einer "Hausgeräteplatte" soll insbesondere eine Platteneinheit eines Hausgeräts verstanden werden. Hierdurch können weitere Gestaltungsmöglichkeiten für Hausgerätevorrichtungen, insbesondere Hausgeräteplatten, eröffnet werden.

Ferner wird ein Hausgerät, insbesondere ein Kochfeld und vorzugsweise ein Induktionskochfeld, mit einer erfindungsgemäßen Hausgerätevorrichtung vorgeschlagen. Vorzugsweise kommt die Hausgerätevorrichtung als Kochfeldplatte des Kochfelds zum Einsatz. Hierdurch kann vorteilhaft eine einheitliche Anmutung verschiedener, in einer Küche integrierter Hausgeräte erzielt werden. Insbesondere wenn die Hausgeräte teilweise eine Edelstahlanmutung aufweisen, insbesondere eine Anmutung von gebürstetem Edelstahl, kann vorteilhaft ein einheitliches Design verwirklicht werden, da eine Kochfeldplatte mit einer entsprechenden Edelstahlanmutung geschaffen werden kann und dies insbesondere ohne Beeinträchtigung einer Funktion eines Kochfelds, insbesondere eines Induktionskochfelds.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Ein Fachmann wird die Merkmale zweckmäßigerweise auch einzeln betrachten und zu sinnvollen weiteren Kombinationen zusammenfassen.

Es zeigen:
- Fig. 1: ein Kochfeld mit einer als Hausgeräteplatte ausgebildeten Hausgerätevorrichtung in einer Draufsicht,
- Fig. 2: die Hausgerätevorrichtung in einer nicht maßstäblichen, schematischen Schnittdarstellung entlang einer Linie II-II in Fig. 1,
- Fig. 3: einen Schritt eines Herstellverfahrens der Hausgerätevorrichtung in einer nicht maßstäblichen, schematischen Darstellung und
- Fig. 4: einen beim Herstellverfahren verwendeten Trägerkörper mit einem eingebetteten Abrasivstoff.

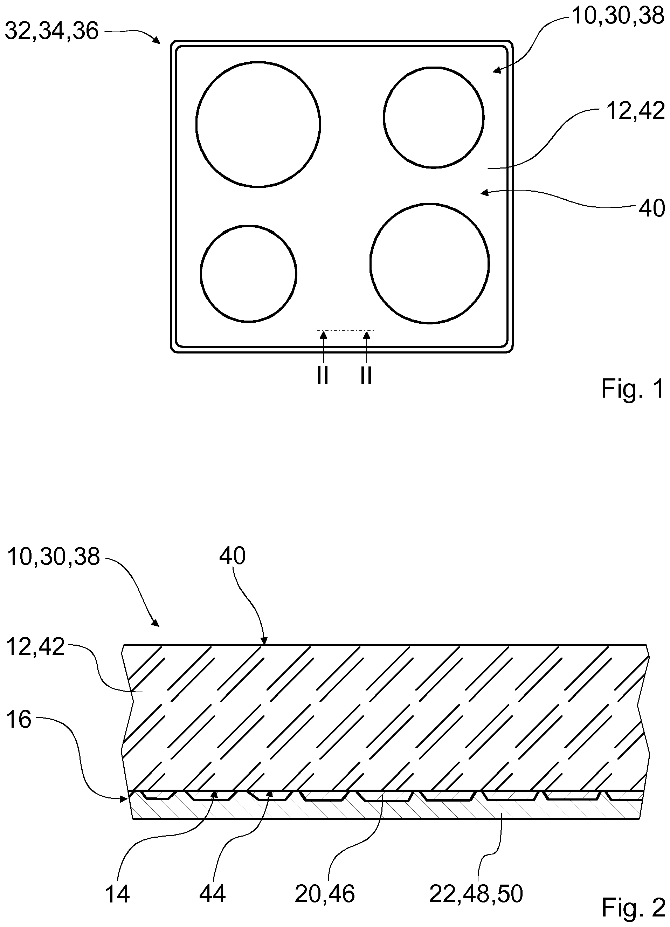

Figur 1 zeigt ein als Kochfeld 34 ausgebildetes Hausgerät 32 mit einer erfindungsgemäßen Hausgerätevorrichtung 10. Das Kochfeld 34 ist als ein Induktionskochfeld 36 ausgebildet. Die Hausgerätevorrichtung 10 ist als eine Hausgeräteplatte 30, und zwar als eine Kochfeldplatte 38, ausgebildet. Die Kochfeldplatte 38 ist in einem betriebsbereiten Zustand horizontal angeordnet und in bekannter Weise zu einem Aufstellen von Gargeschirr auf eine Oberseite 40 einer Grundplatte 42 der Kochfeldplatte 38 vorgesehen (nicht dargestellt).

Figur 2 zeigt die Hausgerätevorrichtung 10 in einer nicht maßstäblichen, schematischen Schnittdarstellung entlang einer Linie II-II in Figur 1. Die Grundplatte 42 bildet einen Grundkörper 12 der Hausgerätevorrichtung 10. Der Grundkörper 12 besteht aus einer Glaskeramik. Die Glaskeramik ist zumindest teilweise durchsichtig. An einer der Oberseite 40 gegenüberliegenden Unterseite 44 des Grundkörpers 12 ist an einem Oberflächenteilbereich 14 eine Schichteinheit 16 angeordnet. Der Oberflächenteilbereich 14 erstreckt sich über die gesamte Unterseite 44 des Grundkörpers 12. Die Schichteinheit 16 umfasst zwei Schichten 20, 22. Die Schichten 20, 22 sind parallel zueinander angeordnet. Bei der Schicht 20 handelt es sich um eine Beschichtung 46 des Grundkörpers 12. Die Beschichtung 46 ist metallisch. Die Schicht 20 weist eine maximale Dicke von ungefähr 50 nm auf. Bei der Schicht 22 handelt es sich um eine Beschichtung 48 der Schicht 20. Die Schicht 22 ist als eine Schutzschicht 50 ausgebildet, welche dazu vorgesehen ist, die Schicht 20 vor mechanischen und/oder chemischen und/oder thermischen Einwirkungen zu schützen. Die Schutzschicht 50 ist dielektrisch. Die Schicht 22 weist eine maximale Dicke von ungefähr 150 nm auf. Wie in Figur 2 schematisch angedeutet, ist die Schicht 20 stellenweise unterbrochen. Alternativ kann eine Schicht auch stellenweise lediglich eine reduzierte Schichtdicke aufweisen und insbesondere nicht unterbrochen sein.

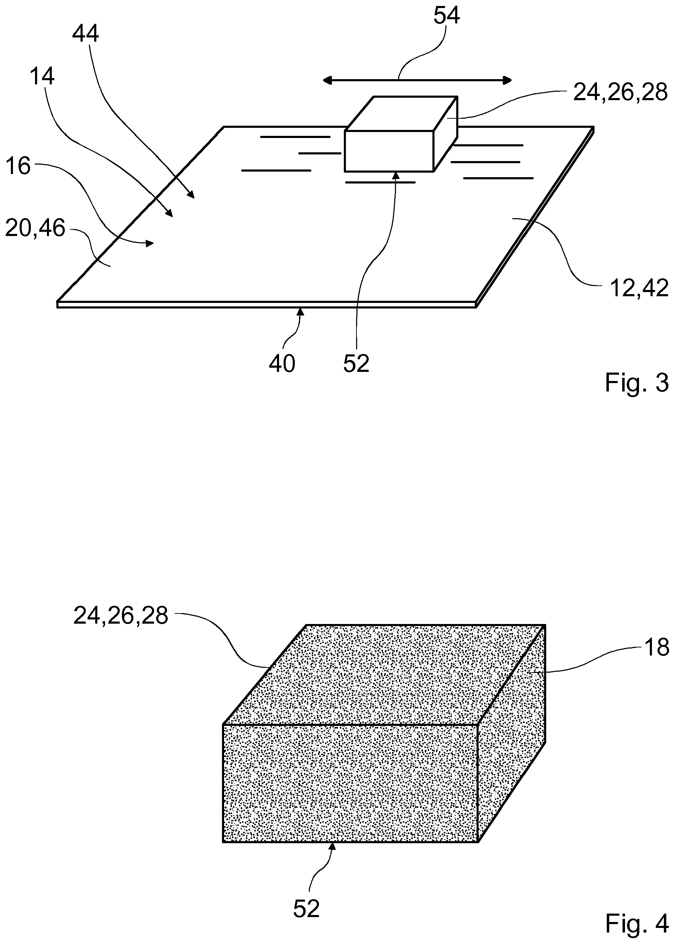

Die Hausgerätevorrichtung 10 ist nach einem im Folgenden beschriebenen Herstellverfahren hergestellt. Figur 3 zeigt hierzu einen Schritt des Herstellverfahrens der Hausgerätevorrichtung 10. Figur 4 zeigt einen beim Herstellverfahren verwendeten Trägerkörper 24 mit einem eingebetteten Abrasivstoff 18. Nach einer Herstellung des Grundkörpers 12 wird dieser zunächst auf seiner Unterseite 44 mittels einer Kathodenzerstäubung mit der Schicht 20 beschichtet. Anschließend wird, wie in Figur 3 dargestellt, die Schicht 20 der Schichteinheit 16 einer abrasiven Abtragung durch den Abrasivstoff 18 unterzogen. Als Abrasivstoff 18 wird Aluminiumoxid verwendet. Eine mittlere Korngröße des Abrasivstoffs 18 liegt bei 101 µm und/oder 254 µm. Hierbei liegt der Abrasivstoff 18 homogen eingebettet in dem Trägerkörper 24 vor. Als Trägerkörper 24 wird ein zumindest wesentlich elastischer Körper 26 und zwar ein aus Gummi bestehender Körper 28 verwendet. Der Trägerkörper 24 kann eine beliebige, dem Fachmann als sinnvoll erscheinende Formgebung aufweisen. Im vorliegenden Fall ist der Trägerkörper 24 quaderförmig. Alternativ kann ein Trägerkörper, insbesondere im Falle einer Automatisierung des Herstellverfahrens, auch in Form eines vorzugsweise aufgerollten Bands vorliegen. Entscheidend ist lediglich, dass während der abrasiven Abtragung eine dem Grundkörper 12 zugewandte Oberfläche 52 des Trägerkörpers 24 relativ zum Oberflächenteilbereich 14 bewegt wird. Hierdurch wird die Schicht 20 stellenweise abgetragen. Durch Verwendung des zumindest wesentlich elastischen Trägerkörpers 24 kann eine Beschädigung des Grundkörpers 12 während der abrasiven Abtragung vermieden werden. Im vorliegenden Fall ist eine Bewegung der Oberfläche 52 relativ zum Oberflächenteilbereich 14 eine geradlinige Bewegung parallel zu einer Richtung 54, wodurch eine Edelstahlanmutung und/oder eine Anmutung von gebürstetem Stahl, insbesondere bei einer Betrachtung der Schicht 20 durch den Grundkörper 12 hindurch, erzeugt werden kann. Um eine gleichmäßige Anmutung zu erreichen, wird der gesamte Oberflächenteilbereich 14, das heißt die gesamte Unterseite 44 des Grundkörpers 12, der abrasiven Abtragung unterzogen. Alternativ ist auch jede beliebige, dem Fachmann als sinnvoll erscheinende Bewegungsbahn der Oberfläche 52 relativ zum Oberflächenteilbereich 14 denkbar. Nach Abschluss der abrasiven Abtragung wird über die Schicht 20 die Schicht 22 beschichtet, vorzugsweise mittels eines Siebdruckverfahrens.

Falls die Schicht 22 eine Farbgebung aufweist, können weitere vorteilhafte optische Effekte erzielt werden. Ferner ist denkbar, dass mehrere Schichten einer alternativen Schichteinheit aufgebracht werden, insbesondere zumindest teilweise durch eine Kathodenzerstäubung, und dass diese Schichten gemeinsam einer abrasiven Abtragung unterzogen werden. Des Weiteren ist auch denkbar, dass auf eine Schutzschicht verzichtet wird.

### Bezugszeichen

- 10: Hausgerätevorrichtung
- 12: Grundkörper
- 14: Oberflächenteilbereich
- 16: Schichteinheit
- 18: Abrasivstoff
- 20: Schicht
- 22: Schicht
- 24: Trägerkörper
- 26: Elastischer Körper
- 28: Körper
- 30: Hausgeräteplatte
- 32: Hausgerät
- 34: Kochfeld
- 36: Induktionskochfeld
- 38: Kochfeldplatte
- 40: Oberseite
- 42: Grundplatte
- 44: Unterseite
- 46: Beschichtung
- 48: Beschichtung
- 50: Schutzschicht
- 52: Oberfläche
- 54: Richtung

## Patentansprüche

1. Herstellverfahren einer Hausgerätevorrichtung (10), welche einen Grundkörper (12), welcher als eine Grundplatte ausgebildet ist und zumindest teilweise aus einer Glaskeramik besteht, und zumindest eine an wenigstens einem Oberflächenteilbereich (14) des Grundkörpers (12) angeordnete Schichteinheit (16) umfasst, **dadurch gekennzeichnet, dass** die Schichteinheit (16) wenigstens teilweise einer abrasiven Abtragung durch einen Abrasivstoff (18) unterzogen wird und ein Abrasivstoff (18) mit einer mittleren Korngröße zwischen 75 µm und 350 µm verwendet wird.

2. Herstellverfahren nach Anspruch 1, **dadurch gekennzeichnet, dass** wenigstens eine Schicht (20, 22) der Schichteinheit (16) durch eine Kathodenzerstäubung aufgebracht wird.

3. Herstellverfahren nach Anspruch 1 oder 2, **dadurch gekennzeichnet, dass** als Abrasivstoff (18) zumindest im Wesentlichen Aluminiumoxid verwendet wird.

4. Herstellverfahren nach einem der vorhergehenden Ansprüche, **dadurch gekennzeichnet, dass** die abrasive Abtragung mit einem in einem Trägerkörper (24) eingebetteten Abrasivstoff (18) durchgeführt wird.

5. Herstellverfahren nach Anspruch 4, **dadurch gekennzeichnet, dass** als Trägerkörper (24) ein zumindest wesentlich elastischer Körper (26) verwendet wird.

6. Herstellverfahren nach Anspruch 4 oder 5, **dadurch gekennzeichnet, dass** als Trägerkörper (24) ein zumindest im Wesentlichen aus Gummi bestehender Körper (28) verwendet wird.

7. Herstellverfahren nach einem der Ansprüche 4 bis 6, **dadurch gekennzeichnet, dass** der Trägerkörper (24) bei der abrasiven Abtragung relativ zur Schichteinheit (16) bewegt wird.

8. Hausgerätevorrichtung (10), insbesondere Hausgeräteplatte (30), welche durch ein Herstellverfahren nach einem der vorhergehenden Ansprüche hergestellt ist.

9. Hausgerät (32), insbesondere Kochfeld (34), mit einer Hausgerätevorrichtung (10) nach Anspruch 8.

## Claims

1. Method of manufacturing a domestic appliance device (10), which comprises a main body (12), which is embodied as a base plate and consists at least in part of ceramic glass, and at least one coating unit (16) arranged on at least one surface subregion (14) of the main body (12), **characterised in that** the coating unit (16) is subjected at least in part to an abrasive application by means of an abrasive (18) and an abrasive (18) with an average grain size of between 75µm and 350µm is used.

2. Method of manufacturing according to claim 1, **characterised in that** at least one coating (20, 22) of the coating unit (16) is applied by means of cathode sputtering.

3. Method of manufacturing according to claim 1 or 2, **characterised in that** aluminium oxide is used at least substantially as the abrasive (18).

4. Method of manufacturing according to one of the preceding claims, **characterised in that** the abrasive application is carried out with an abrasive (18) embedded in a carrier (24).

5. Method of manufacturing according to claim 4, **characterised in that** an at least substantially elastic element (26) is used as the carrier (24).

6. Method of manufacturing according to claim 4 or 5, **characterised in that** an element (28) consisting at least substantially of rubber is used as the carrier (24).

7. Method of manufacturing according to one of claims 4 to 6, **characterised in that** the carrier (24) is moved relative to the coating unit (16) when the abrasive is applied.

8. Domestic appliance device (10), in particular domestic appliance plate (30), which is manufactured by a method of manufacturing according to one of the preceding claims.

9. Domestic appliance (32), in particular hob (34), having a domestic appliance device (10) according to claim 8.

## Revendications

1. Procédé de fabrication d'un dispositif d'appareil ménager (10), qui englobe un bâti (12), exécuté sous la forme d'une plaque de base et au moins en partie composé d'une vitrocéramique, et au moins une unité de couche (16) disposée sur au moins une zone de surface partielle (14) du bâti (12), **caractérisé en ce que** l'unité de couche (16) est au moins partiellement soumise à une érosion abrasive par un matériau abrasif (18) et un matériau abrasif (18) présentant une granulométrie moyenne entre 75 µm et 350 µm est utilisée.

2. Procédé de fabrication selon la revendication 1, **caractérisé en ce qu'au** moins une couche (20, 22) de l'unité de couche (16) est fournie par une pulvérisation cathodique.

3. Procédé de fabrication selon la revendication 1 ou 2, **caractérisé en ce que** l'oxyde d'aluminium est au moins essentiellement utilisé comme matériau abrasif (18).

4. Procédé de fabrication selon l'une des revendications précédentes, **caractérisé en ce que** l'érosion abrasive s'effectue avec un matériau abrasif (18) logé dans un corps de support (24).

5. Procédé de fabrication selon la revendication 4, **caractérisé en ce qu'**un corps au moins essentiellement élastique (26) est utilisé comme corps de support (24).

6. Procédé de fabrication selon la revendication 4 ou 5, **caractérisé en ce qu'**un corps essentiellement composé de caoutchouc (28) est utilisé comme corps de support (24).

7. Procédé de fabrication selon l'une des revendications 4 à 6, **caractérisé en ce que** le corps de support (24) est déplacé par rapport à l'unité de couche (16) lors de l'érosion abrasive.

8. Dispositif d'appareil ménager (10), en particulier plaque d'appareil ménager (30), fabriquée via un procédé de fabrication selon l'une des revendications précédentes.

9. Appareil ménager (32), en particulier table de cuisson (34), avec un dispositif d'appareil ménager (10) selon la revendication 8.
